(19) Europäisches Patentamt
European Patent Office
Office européen des brevets

(11) Publication number: **0 187 137**
**B1**

(12) # EUROPEAN PATENT SPECIFICATION

(45) Date of publication of patent specification: **11.07.90**

(51) Int. Cl.$^5$: **B 29 D 11/00**

(21) Application number: **86100053.7**

(22) Date of filing: **03.01.86**

(54) **Colored contact lenses and method for making same.**

(30) Priority: **04.01.85 US 688927**
**03.05.85 US 730212**

(43) Date of publication of application:
**09.07.86 Bulletin 86/28**

(45) Publication of the grant of the patent:
**11.07.90 Bulletin 90/28**

(84) Designated Contracting States:
**AT BE CH DE FR GB IT LI LU NL SE**

(56) References cited:
**EP-A-0 106 004**
**DE-B-1 176 030**
**GB-A-2 006 114**
**GB-A-2 064 987**
**US-A-3 987 220**

(73) Proprietor: **SCHERING CORPORATION**
**2000 Galloping Hill Road**
**Kenilworth New Jersey 07033 (US)**

(72) Inventor: **Loshaek, Samuel**
**2219 North Orchard Street**
**Chicago Illinois 60614 (US)**

(74) Representative: **von Kreisler, Alek, Dipl.-Chem.**
**et al**
**Deichmannhaus am Hauptbahnhof**
**D-5000 Köln 1 (DE)**

**EP 0 187 137 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates to contact lenses capable of imparting an apparent color modification to the wearer's iris. The inventive lens may be prepared with or without an optical prescription for correcting visual defects. The inventive lenses may contain an opaque color coat which can bring about a fundamental color change in the apparent color of the wearer's iris, for example from dark brown to light blue. Alternatively, the color coat may be transparent, in which case the apparent eye tint may be enhanced or the apparent color of the light-colored eyes may be changed, for example, from light blue to green. Hence, as used throughout the present specification and claims, the term "colored contact lenses" is intended to mean a lens having either a transparent or an opaque color coat.

The invention provides a high degree of flexibility in coloring the lenses. Not only is it possible to choose from opaque or transparent color coats, but it is also possible to color selected portions of the lens. Moreover with the invention, it is possible to color the lens in a pattern that simulates the fine structure of the iris, using more than one color if that is desirable. Alternatively, it is possible to deposit an opaque pattern over the iris portion of the lens in a manner that can change the apparent color of the iris, but allows visualization of the structure of the iris, as described in European Patent Application No. 85 104 511.2, filed April 13, 1985. Both hard, i.e., non-hydrophilic lenses, and soft, i.e., hydrophilic lenses, may be colored provided the lens polymer contains the required functional groups as discussed later. The inventive lenses are quite durable and retain their color upon prolonged use, even though subjected to the usual disinfecting and cleaning procedures.

The present invention comprises a method of making a colored contact lens comprising the steps of:

a) providing a contact lens constructed of polymer,

b) coating at least a portion of a surface of the lens with a color coat comprising coloring substance and binding polymer, and

c) binding the lens polymer to the binding polymer by the reaction of functional groups selected from at least one of —COOH, —OH, and —NH—R, wherein R is hydrogen or alkyl with functional groups selected from at least one of —NCO and epoxy, wherein either

(A) the lens polymer and binding polymer have functional groups selected from at least one of —COOH, —OH, and —NH—R, and the color coat also comprises an additional compound having at least two groups per molecule selected from at least one of —NCO and epoxy; or

(B) the lens polymer has functional groups selected from at least one of —COOH, —OH, and —NH—R, and the binding polymer has functional groups selected from at least one of —NCO and epoxy; or

(C) the lens polymer has functional groups selected from at least one of —NCO and epoxy, and the binding polymer has functional groups selected from at least one of —COOH, —OH, and —NH—R; or

(D) the lens polymer and binding polymer have functional groups selected from at least one of —NCO and epoxy and the color coat also comprises an additional compound having at least two groups per molecule selected from at least one of —COOH, —OH, and —NH—R.

Some coloring substances have functional groups which may also react with the above described functional groups, and this reaction is also within the scope of the invention. However, as explained later, the choice of coloring substances is not limited to those having reactive functional groups.

A second aspect of the invention comprises colored contact lenses made by the inventive method, comprising:

(a) a lens body constructed of polymer

(b) coloring substance mixed with binding polymer on at least a portion of a surface of the lens,

wherein the binding polymer and lens polymer are bonded to each other by the reaction of functional groups selected from at least one of —COOH, —OH, and —NH—R, wherein R is hydrogen or $C_1$ to $C_8$ alkyl with functional groups selected from at least one of —NCO and epoxy.

The lenses colored by the inventive process are constructed of a polymer having functional groups selected from Group A or B:

Group A: at least one of —COOH, —OH, and —NH—R, wherein R is hydrogen or $C_1$—$C_8$ alkyl, preferably lower alkyl.

Group B: —NCO and epoxy.

The term polymer means a material formed by polymerizing one or more monomers or a blend of such polymers. The functional groups project from the polymer backbone or from another group that projects from the polymer backbone. For example, polymerized hydroxyethyl methacrylates may be represented by:

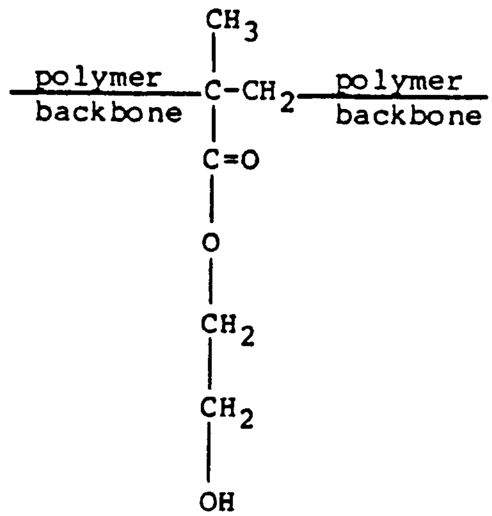

The hydroxyl functional group is at the bottom of the above representation.

As used herein the term "alkyl" means straight-chain, branched-chain and cyclic saturated hydrocarbon groups having 1 to 8 carbon atoms; $C_1$ to $C_2$ alkyl groups are preferred.

Examples of suitable monomers that may be used for providing the functional groups of Group A include acrylic acid; methacrylic acid; hydroxy $C_1$ to $C_6$ alkyl esters of acrylic and methacrylic acid, such as hydroxyethyl methacrylate, hydroxypropyl methacrylate, hydroxybutyl methacrylate and hydroxyethyl acrylate; amino $C_1$ to $C_6$ alkylesters of acrylic and methacrylic acid, such as aminoethyl methacrylate, aminooctyl methacrylate, N-methyl aminoethyl methacrylate, N-Octylaminoethyl methacrylate, and aminopentyl acrylate; glyceryl esters of acrylic and methacrylic acid, such as glyceryl mono methacrylate, glyceryl mono acrylate, and combinations thereof. Examples of suitable monomers that may be used for providing the functional groups of Group B include isocyanato ethyl methacrylate, glycidyl methacrylate, and combinations thereof.

In addition to the above, the contact lenses may also contain copolymerized monomers not having the functional groups, for example, N-vinyl heterocyclic monomers, such as N-vinyl-2-pyrrolidone; $C_1$ to $C_6$ alkyl vinyl ethers, such as vinyl ethyl ether; $C_1$ to $C_6$ alkyl ester of acrylic or methacrylic acid, such as methyl methacrylate and propyl acrylate; $C_1$ to $C_6$ alkyl styrene, such as t-butyl styrene; vinyl monomers, such as vinyl chloride and vinyl acetate; diene monomers such as isoprene; and $C_1$ to $C_6$ alkoxy to $C_1$ to $C_6$ alkyl esters of acrylic or methacrylic acid, such as ethoxyethyl methacrylate or methoxypropyl acrylate.

A preferred monomer for making the lenses is hydroxyethyl methacrylate.

Examples of preferred lens polymers are described in U.S. Patent No. 4,405,773 (Loshaek et al.) and contain 75 to 95 weight percent hydroxy straight-or-branched-chain $C_2$ to $C_4$ alkyl monoester of acrylic or methacrylic acid (preferably hydroxyethyl methacrylate), 5 to 20 percent $C_2$—$C_4$ alkoxy $C_2$—$C_4$ alkyl ester of acrylic or methacrylic acid (preferably ethoxyethyl methacrylate) and 0.3 to 4 percent acrylic or methacrylic acid (preferably methacrylic acid).

If the lens is to be hydrophilic, large amounts of hydrophilic monomers which provide —OH, or —COOH functional groups, such as hydroxyethyl methacrylate and methacrylic acid, are used. For hard lenses, large amounts of monomers not containing hydrophilic functional groups, such as methyl methacrylate or t-butyl styrene, are used in combination with small amounts, i.e. amounts sufficient to provide the required adhesion, of monomers having the functional groups.

Polymerization and lens shaping are well known in the art and are not part of this invention. Any of the well known techniques may be used, provided the lens polymer has the functional groups.

To produce lenses in accordance with the invention, at least a portion of the surface of the lens is coated with a color coat comprising coloring substance and binding polymer which, like the lens polymer also has functional groups selected from Group A or Group B. If the lens polymer contains functional groups from Group A and the binding polymer has functional groups from Group B, or vice versa, the lens and binding polymers may be bonded directly to each other. However, if both the lens and binding polymers have functional groups from the same Group, for example Group A, then a compound having at least two functional groups per molecule of the other Group is used, e.g. if both lens and binding polymer have functional groups of Group A, a compound having at least two functional groups per molecule from Group B is used. Furthermore, if both lens and binding polymer have functional groups from the same Group, the functional groups need not be the same or in the same amount in the lens and binding polymer. It is within the scope of this invention to use more than one color coat on the same lens, with each color coat comprising the same or different binding systems described herein.

Suitable compounds having at least two functional groups of Group B include hexamethylene diisocyanate (OCN—$(CH_2)_6$—NCO), and bisphenol A diepoxide,

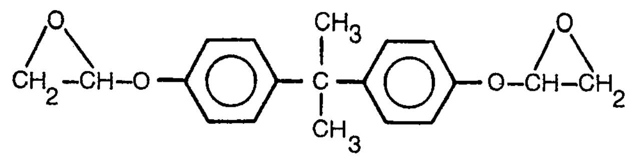

Suitable compounds having at least two functional groups of Group A incude ethylene glycol, ethylene diamine, and adipic acid.

Either the front or rear surface or both may be coated, but the front convex surface is easier to coat than the rear concave surface. The coated lens is then subjected to conditions which cause the functional groups of Group A to react with the functional groups of Group B. If the coloring substance is transparent and the lens is a hard lens having a diameter no larger than that of the iris, then the entire lens surface may be coated. If the coloring substance is opaque, then only the portion of the lens corresponding to the iris should be coated, leaving the pupil section clear. For hydrophilic lenses, which are larger than the iris, the portion of the lens extending beyond the iris may be left uncoated.

The presently preferred embodiment of the invention is to use lens and binding polymer having functional groups from Group A, and to use a compound having at least two isocyanate groups per molecule to supply the functional groups from Group B. The remainder of this description is directed to that embodiment. However, other embodiments may be carried out using similar principles.

There are three preferred ways to carry out the coating step of the intensive method:

(1) A mixture comprising coloring substance, binding polymer, isocyanate compound, and a solvent is coated onto the lens surface or portion thereof.

(2) The lens is first coated with a mixture of isocyanate compound and a solvent and this coating is, in turn, coated with a mixture of binding polymer, coloring substance and solvent.

(3) The separate coating steps of method (2) are reversed. The lens is first coated with a mixture of binding polymer, coloring substance, and solvent and this coating is coated with a mixture of the isocyanate compound and solvent.

The description of monomers used in preparing the binding polymer is the same as that for monomers used in making the lens. The functional groups (at least one of —OH, —COOH, and —NH—R) are present. For hydrophilic lenses the binding polymer may be made from the same monomers present in the same concentration as was used to make the lens. However, this is not absolutely necessary, as long as both polymers are such that upon hydration warpage does not occur. The binding polymer is preferably prepared in a solution that initially contains the selected monomers, solvent for the monomers, a molecular weight modifier and a polymerization initiator in a reaction vessel that is heated for a period sufficient to achieve a satisfactory polymerization level. This produces an uncrosslinked polymer dissolved in solvent which preferably contains some residual unreacted monomer. It is desirable to limit the molecular weight and amount of crosslinking of the polymers to maintain the viscosity of the reaction solution in a usable range.

The molecular weight of the binding polymer may be conveniently controlled by using a molecular weight modifier such as a chain transfer agent, as is well known in the art. Suitable chain transfer agents include 2-mercapto ethanol, 1-dodecyl mercaptan and other alkyl mercaptans. Use of extra solvent is also a way to control molecular weight.

Suitable polymerization initiators include free radical initiators such as 2,2-azobis(isobutyronitrile), benzoyl peroxide, t-butyl peroxybenzoate, and t-butyl peroxide. However, the exact method of polymerizing the binding polymer is not critical.

Suitable solvents include ethyl cellosolve, cyclpentanone, ethanol, t-butanol, acetone and other aliphatic and alicyclic ketones. A combination of solvents may be used. Ethyl lactate is a good co-solvent and under some circumstances water may be used as a co-solvent. The preferred solvent is a combination of cyclopentanone and ethyl lactate. The binding polymer solution and coloring substance are milled to form a colorant paste.

If the binding polymer, coloring substance and isocyanate compound are to be applied in one step, the colorant paste, isocyanate compound and optional additional monomers are blended to form an ink, paint, or other applyable material which is coated onto the lens. If the applyable material is to be stored for long periods of time, it should be prepared without the isocyanate compound, which can be blended with the applyable material just prior to its being coated on to the lens. The pot life of the applyable material depends upon the reactivity of the isocyanate compound with the functional groups of the binding polymer.

The choice of coloring substances is quite flexible, since they need not necessarily contain functional groups. Preferred coloring substances include for a blue color, phthalocyanine blue; for a green color, phthalocyanine green and chromium sesquioxide; for yellow, red, brown and black colors, various iron oxides. Of course, blends of such coloring substances are used to achieve the desired shade. For an opaque coating, titanium dioxide is a preferred opaquing agent. Opaquing agents, which are considered to be coloring substances within the present specification and claims, are blended with the other coloring substances into the colorant paste.

Hexamethylene diisocyanate ($OCN—(CH_2)_6—NCO$) is the preferred isocyanate compound. However, use of any isocyanate having the formula $R^1(NCO)_n$ wherein n is greater than or equal to two, (preferably two) is within the scope of this invention. $R^1$ may be a di- or greater valent organic radical such as aliphatic, alicyclic, aliphatic-alicyclic, aromatic, or aliphatic-aromatic hydrocarbon. Thus, other suitable isocyanate compounds are 2,4-toluene diisocyanate and bis(isocyanate phenyl) methane.

It has been found that the addition of a crosslinking agent for the lens and binding polymer, such as ethylene glycol dimethacrylate reduces the amount of isocyanate compound needed to achieve good adhesion.

The coated lens is then subjected to conditions which cause the isocyanate groups to react with the functional groups of the binding and lens polymers, thereby firmly binding the lens and binding polymer to each other and entrapping the coloring substance within the binding polymer in a manner which forms a very stable, durable colored contact lens. Of course, some coloring substances may have functional groups that also react directly with the isocyanate groups, and such additional reaction is also within the scope of this invention. Typically the lens is dried under vacuum at at least about 20°C (preferably 50°C) for at least about 15 (preferably 30 minutes) to evaporate the solvent, then cured at at least about 70°C (preferably 90°C) for at least about 30 minutes (preferably 90 minutes). Catalyst to speed the reaction of the isocyanate compound with the lens and binder polymers may be added to the ink immediately prior to its being coated onto the lens. Such catalysts include tertiary amines, such as triethylamine, benzyl dimethylamine, dimethylcyclohexylamine; and metallic catalysts such as stannous octoate and dibutyltin dilaurate. The above conditions are illustrative and not intended to limit the scope of the invention. Time and temperature can be optimized for any combination of materials. The color coat may optionally be coated with a transparent, substantially pigment-free coat comprising binding polymer.

For colored hydrophilic contact lenses, the cured lenses are hydrated by methods commonly used for uncolored hydrophilic lenses.

The following table shows the desirable amounts of ingredients used to form inks in accordance with the invention.

Weight Percent of Components in Ink

| Ingredient | Broad Range | Preferred Range Range | More Preferred |
|---|---|---|---|
| Binding Polymer (including residual unreacted monomer) | 10—40 | 13—25 | 16—23 |
| Isocyanate Compound | Functional (1) Amount | 0.5—10 | 1.5—5 |
| Opaque Coloring Substance (if opaque color is desired) | Functional (1) Amount | Functional (1) Amount | 6.5—30 |
| Transparent Coloring Substance (if tranparent color is desired) | Functional (1) Amount | Functional (1) Amount | 1—20 |
| Polymerization Initiator | 0—1.0 | 0.05—0.5 | 0.1—0.3 |
| Additional Monomers | Functional (1) Amount | 0—50 | 15—30 |
| Solvent | q.s. ad 100% | q.s. ad 100% | q.s. ad 100% |

(1) "Functional Amount" means the amount which an experimenter, skilled in the art, would use to achieve the desired result.

The following examples illustrate the invention. In the examples the following abbreviations are used.
HEMA is 2-hydroxyethyl methacrylate
EOEMA is 2-ethoxyethyl methacrylate
MAA is methacrylic acid
AIBN is azobis(isobutyronitrile)
HMD is hexamethylene diisocyanate
ME is 2-mercapto ethanol

Examples

Example 1

Preparation of a binding polymer-solvent mixture

Prepare a mixture containing 91.5 parts HEMA, 8 parts EOEMA, 0.5 parts MAA, 0.5 parts ME and 0.5 parts AIBN. Dissolve 43 parts of this mixture in 57 parts of cyclopentanone. Polymerize by heat (typically 38°C for 48 hours for this mixture) until only about 10 percent of the monomer remains. This amount of polymerization for this formulation has been found to provide the proper application viscosity and adhesion characteristics. The amount of residual monomer remaining at any time can be determined by gas chromatography. The viscosity of the mixture after polymerization was about 25 $N \cdot s/m^2$ (25,000 cps). To 100 parts of the resulting mixture, add 38 parts of ethyl lactate and dissolve. The resulting Binding Polymer-Solvent mixture is used as a starting material in further examples.

Example 2

Preparation of a colorant paste

The binding polymer-solvent mixture prepared in example 1 is blended with coloring substance in the ratios shown in the table below to form a slurry. The slurry is milled on a roll mill for about 15 minutes until a homogeneous paste results. Alternatively, the paste may be prepared by ball milling the coloring substance with the binding polymer and solvents.

| Example | Coloring Substance | Parts Coloring Substance | Parts Binding-polymer Solvent Mixture | Resulting Color |
|---|---|---|---|---|
| 2A | Phthalocyanine blue | 1 | 66 | Transparent blue |
| 2B | Chromium sesquioxide and phthalocyanine blue (300:1) | 4 | 9 | Green |
| 2C | Same as for example 2B | 1 | 3 | Green |
| 2D | Iron oxides and chromium sesquioxide (3:2) | 4 | 13 | Brown |
| 2E | Phthalocyanine blue and $TiO_2$ (1:21) | 1 | 12.5 | Opaque blue |

Example 3

Preparation of ink

Because the color coat is to be applied to the lens by printing, the materials prepared by these examples are inks. However, other application methods, such as painting or spraying are possible. Hence, use of inks, paints, and other color coating substances are in accordance with the invention.

Transparent and opaque inks suitable for coating on to contact lenses are prepared by blending the ingredients listed in the following table.

| Example No. | Ingredients |
|---|---|
| 3A | 3 parts paste of example 2E<br>1 part monomer mixture containing<br>HEMA 91.5 parts<br>EOEMA 8 parts<br>MAA 0.5 parts<br>AIBN 0.5 parts |

Example 3A uses no isocyanate compound and is for comparison purposes only.

| Example No. | Ingredients |
|---|---|
| 3B | 3 parts paste of example 2E<br>1 part monomer mixture containing<br>HEMA 91.5 parts<br>EOEMA 8 parts<br>MAA 0.5 parts<br>AIBN 0.5 parts<br><br>HMD 0.61 percent of the above 4 parts |
| 3C | 3 parts paste of example 2E<br>1 part monomer mixture containing<br>HEMA 91.5 parts<br>EOEMA 8 parts<br>MAA 0.5 parts<br>AIBN 0.5 parts<br><br>HMD 0.99 percent of the above 4 parts |
| 3D | 3 parts paste of example 2E<br>1 part monomer mixture containing<br>HEMA 91.5 parts<br>EOEMA 8 parts<br>MAA 0.5 parts<br>AIBN 0.5 parts<br><br>HMD 1.5 percent of the above 4 parts |
| 3E | 3 parts paste of example 2E<br>1 part monomer mixture containing<br>HEMA 91.5 parts<br>EOEMA 8 parts<br>MAA 0.5 parts<br>AIBN 0.5 parts<br><br>HMD 1.98 percent of the above 4 parts |
| 3F | 3 parts paste of example 2E<br>1 part monomer mixture containing<br>HEMA 91.5 parts<br>EOEMA 8 parts<br>MAA 0.5 parts<br>AIBN 0.5 parts<br><br>HMD 2.44 percent of the above 4 parts |
| 3G | 3 parts paste of example 2E<br>1 part monomer mixture containing<br>HEMA 91.5 parts<br>EOEMA 8 parts<br>MAA 0.5 parts<br>AIBN 0.5 parts<br><br>HMD 4.79 percent of the above 4 parts |

| Example No. | Ingredients |
|---|---|
| 3H | 3 parts paste of example 2E<br>1 part monomer mixture containing<br>HEMA 91.5 parts<br>EOEMA 8 parts<br>MAA 0.5 parts<br>AIBN 0.5 parts<br><br>HMD 9.7 percent of the above 4 parts |
| 3I | 3 parts of paste of example 2A<br>1 part monomer mixture of example 3F<br><br>HMD 2.44 percent of the above 4 parts |
| 3J | 3 parts paste of example 2B<br>1 part monomer mixture of example 3F<br><br>HMD 2.44 percent of the above 4 parts |
| 3K | 3 parts paste of example 2D<br>1 part monomer mixture of example 3F<br><br>HMD 2.44 percent of the above 4 parts |

Example 4

Alternative ink compositions

Prepare a mixture containing 88.1 parts HEMA, 9.8 parts EOEMA, 2.1 parts MAA, 0.5 parts AIBN, and 0.5 parts ME. Dissolve 43 parts of this mixture in 57 parts of cyclopentanone. Polymerize by heat until about 10 percent of the monomers remain. To 100 parts of the resulting mixture add 38 parts of ethyl lactate and dissolve to form a binding polymer-solvent mixture.

Repeat examples 2A through 2E using this binding polymer-solvent mixture to form colorant pastes similar to colorant pastes 2A through 2E.

Repeat example 3 making inks having the following formulas:

| Example No. | Ingredients |
|---|---|
| 4A | 3 parts paste similar to example 2E<br>1 part monomer mixture containing<br>HEMA 88.1 parts<br>EOEMA 9.8 parts<br>MAA 2.1 parts<br>AIBN 0.1 parts<br><br>HMD 2.44 percent of the above 4 parts |
| 4B | 3 parts of paste similar to example 2A<br>1 part monomer mixture of example 4A<br><br>HMD 2.44 percent of the above 4 parts |
| 4C | 3 parts paste similar to example 2B<br>1 part monomer mixture of example 4A<br><br>HMD 2.44 percent of the above 4 parts |
| 4D | 3 parts paste similar to example 2D<br>1 part monomer mixture of example 4A<br><br>HMD 2.44 percent of the above 4 parts |

Example 5

Repeat example 4A, except omit the AIBN, and use 2.75 percent HMD.

Example 6

Repeat example 3D, except replace the HMD with an equal amount of 2,4-toluene diisocyanate.

Example 7

Printing and testing of colored lenses

Unhydrated hydrophilic contact lenses manufactured as described in U.S. Patent No. 4,405,773, are printed in an annular pattern as described in European Patent Application No. 85 104 511.2, filed April 13, 1985 with the inks of examples 3 to 6. The printed lenses are dried under vacuum at 50°C for 30 minutes, then curred at 90°C for 90 minutes.

The printed contact lenses are hydrated by submersion in a stirred normal saline solution (0.9 percent by weight of salt in water) at pH 8 and temperature of 90—100°C for 2 hours. The hydrated lenses are stored in normal saline buffered at a pH of 7.4.

Two test methods (the rub test and the methanol test) may be used to determine the strength of the adhesive bond. The hydrated lenses are folded back upon themselves in the rub test, printed side in, and rubbed between the thumb and forefinger. In the methanol test the hydrated lenses are sprayed with methanol at room temperature for 30 seconds. In both tests adhesion or lack thereof is observed visually. The methanol test is more severe than the rub test. Batches of 5 lenses are tested. Results of the tests are reported in the table below.

| Ink Example No. | Lens Material[a] | Test Results (Pass/Fail) RUB | Methanol |
|---|---|---|---|
| 3A | 1 | 0/5 | 0/5 |
| 3B | 1 | 1/4 | not tested |
| 3C | 1 | 4/1 | not tested |
| 3D | 1 | 5/0 | not tested |
| 3E | 1 | 5/0 | not tested |
| 3F | 1 | 5/0 | 5/0 |
| 3G | 1 | 5/0 | not tested |
| 3H | 1 | 5/0 | not tested |
| 3I | 1 | 5/0 | 5/0 |
| 3J | 1 | 5/0 | 5/0 |
| 3K | 1 | 5/0 | 5/0 |
| 4A | 2 | 5/0 | 5/0 |
| 4B | 2 | 5/0 | 5/0 |
| 4C | 2 | 5/0 | 5/0 |
| 4D | 2 | 5/0 | 5/0 |
| 5 | 2 | 5/0 | not tested |
| 6 | 1 | 5/0 | not tested |

a. Lenses made of material 1 contain
91.5 parts HEMA
8 parts EOEMA
0.5 parts MAA
and had a water content after hydration of 38%.
Lenses made of material 2 contain
88.1 parts HEMA
9.8 parts EOEMA
2.1 parts MAA
and had a water content of 55% after hydration.

In the test results Sample 3A, which contains no diisocyanate in the color coat, shows adhesion failure. Adhesion improves as more diisocyanate is added.

Example 8

A contact lens comprising 91.5 percent HEMA, 8 percent EOEMA, and 0.5 percent MAA is coated with a solution of 1 percent HMD in 2,2-diethoxy propane. The lens is air dried and printed with an ink having the same composition as the ink of example 3A but containing no diisocyanate. Upon hydration, all five lenses pass the rub test.

This example is repeated except that the lens and binder monomers contain 88.1 percent HEMA, 9.8 percent EOEMA and 2.1 of MAA. Again, all five lenses pass the rub test.

This example illustrates an alternative technique for attaching the colorant to the lens, i.e., by precoating the lens with the isocyanate compound prior to application of the ink.

Example 9

A lens comprising 91.5 percent HEMA, 8 percent EOEMA, and 0.5 percent MAA is printed with the ink of

example 3F. The printed pattern is overcoated with a clear material containing binding polymer, solvent and HMD, but no coloring substance.

The binder-polymer solvent mixture contains substantially uncrosslinked polymers and monomers (approx. 70—80 percent polymerized) of 91.5 percent HEMA, 8 percent EOEMA and 0.5 percent MAA as a 25 percent solids solution in cyclopentanone.

The clear coating material consists of 66.50 parts of the binding polymer solvent mixture, 33.25 parts cyclopentanone and 0.25 parts HMD. Approximately 5 microliters of this solution is spread onto the printed, dried surface of the lens.

After curing the coating, all five lenses pass the rub test. This example shows yet another method of causing the ink to adhere to the lens.

Example 10

An ink was prepared with Gantrez S—95(1) as the polymeric binder. Gantrez S—95(1) is a hydrolyzed methyl vinyl ether-maleic anhydride copolymer from GAF Corporation.

8.0 grams of Gantrez S—95 is stirred into 29.0 grams of ethyl cellosolve and 11.3 grams of distilled water. 34.4 grams of this mixture is blended with 13.2 grams of a slurry of 1.79 weight percent phthalocyanine blue and 37.08 percent $TiO_2$ in ethyl lactate.

2.45 grams of HMD is added to the blended mixture with stirring. Lenses of the composition 88.1 percent HEMA, 9.8 percent EOEMA and 2.1 percent MAA are printed with this colorant. The printed lenses are heated at 80°C for 72 hours at atmospheric pressure. Another set of lenses are printed and heated the same way except that the colorant has no HMD. The lenses with no HMD in the colorant do not pass the rub test. The lenses with HMD in the colorant pass both the rub test and the methanol test. This example illustrates the case in which the binding polymer and lens polymers are different.

It can be seen that the present invention provides a degree of versatility and durability not achievable with prior coloring technique. The color coat may be opaque or transparent. Hard or Soft lenses may be colored. The color coating applied to hydrophilic lenses is more durable than coating applied by prior art methods. Selected portions of the lens may be coated. Indeed, the coating may be deposited over the iris section of the lens in a highly desirable pattern.

(1) Trademark or Tradename

**Claims**

1. A method for making a colored contact lens comprising the steps of:

a) providing a contact lens constructed of polymer,

b) coating at least a portion of a surface of the lens with a color coat comprising coloring substance and binding polymer, and

c) binding the lens polymer to the binding polymer by the reaction of functional groups selected from at least one of —COOH, —OH, and —NH—R, wherein R is hydrogen or $C_1$ to $C_8$ alkyl with functional groups selected from at least one of —NCO and epoxy, wherein either

(A) the lens polymer and binding polymer have functional groups selected from at least one of —COOH, —OH, and —NH—R, and the color coat also comprises an additional compound having at least two groups per molecule selected from at least one point of —NCO and epoxy; or

(B) the lens polymer has functional groups selected from at least one of —COOH, —OH, and —NH—R, and the binding polymer has functional groups selected from at least one of —NCO and epoxy; or

(C) the lens polymer has functional groups selected from at least one of —NCO and epoxy, and the binding polymer has functional groups selected from at least one of —COOH, —OH, and —NH—R; or

(D) the lens polymer and binding polymer have functional groups selected from at least one of —NCO and epoxy and the color coat also comprises an additional compound having at least two groups per molecule selected from at least one of —COOH, —OH, and —NH—R.

2. The method of claim 1(A) wherein the additional compound contains two isocyanate groups.

3. The method of claim 2 wherein the additional compound is selected from hexamethylene diisocyanate, 2,4-toluene diisocyanate, and bis(isocyanatophenyl)methane.

4. The method of any one of claims 1(A), 2, or 3 wherein the lens polymer and binding polymer are formed from monomers comprising at least one monomer selected from acrylic acid, methacrylic acid, hydroxy $C_1$ to $C_6$ alkyl ester of acrylic and methacrylic acid, amino $C_1$ to $C_6$ alkyl ester of acrylic and methacrylic acid, glyceryl esters of acrylic and methacrylic acid, and mixtures thereof.

5. The method of any one of claims 1(A), 2, 3, or 4 wherein the lens polymer and binding polymer further comprises at least one monomer selected from N-vinyl heterocyclic monomers, $C_1$ to $C_6$ alkyl vinyl ethers, $C_1$ to $C_6$ alkyl esters of acrylic or methacrylic acid, $C_1$ to $C_6$ alkyl styrene, vinyl monomers, diene monomers, and $C_1$ to $C_6$ alkoxy $C_1$ to $C_6$ alkyl ester of acrylic or methacrylic acid.

6. The method of any one of claims 1(A), 2, 3, or 4 wherein the lens polymer and binding polymer are formed from a mixture of monomers comprising hydroxyethyl methacrylate, ethoxyethyl methacrylate and methacrylic acid and the additional compound is hexamethylene diisocyanate.

7. The method of any one of claims 1(A), 2, 3, 4, 5, or 6, further comprising the step of applying a transparent, substantially pigment-free, coat comprising binding polymer over the color coat.

8. A lens made by the method of any one of claims 1 to 7.

9. A colored contact lens comprising:

(a) a lens body constructed of polymer

(b) coloring substance mixed with binding polymer on at least a portion of a surface of the lens, wherein the binding polymer and lens polymer are bonded to each other by the reaction of functional groups selected from at least one of —COOH, —OH, and —NH—R, wherein R is hydrogen or $C_1$ to $C_8$ alkyl with functional groups selected from at least one of —NCO and epoxy.

10. The lens of claim 9 wherein the lens polymer and binding polymer are formed from at least one monomer selected from acrylic acid, methacrylic acid, hydroxy $C_1$ to $C_6$ alkyl ester of acrylic or methacrylic acid, amino alkyl ester of acrylic or methacrylic acid, glycerol esters of acrylic or methacrylic acid and mixtures thereof.

**Patentansprüche**

1. Verfahren zur Herstellung einer gefärbten Kontakt-Linse, umfassend die Schritte

(a) des Bereitstellens einer aus einem Polymer aufgebauten Kontaktlinse,

(b) das Beschichten wenigstens eines Teils einer Oberfläche der Linse mit einem eine färbende Susbstanz und ein bindendes Polymer umfassenden Farbüberzug,

(c) das Binden des Linsen-Polymers an das bindende Polymer durch Reaktion funktioneller Gruppen, die aus wenigstens einer der Gruppen —COOH, —OH und —NH—R ausgewählt sind, worin R Wasserstoff oder $C_1$- bis $C_8$-Alkyl mit functionellen Gruppen ist, die aus wenigstens einer der Gruppen —NCO und Epoxy ausgewählt sind,

wobei entweder

(A) das Linsen-Polymer und das bindende Polymer funktionelle Gruppen besitzen, die aus wenigstens einer der Gruppen —COOH, —OH und —NH—R ausgewählt sind, und der Farbüberzug auch eine zusätzliche Verbindung enthält, die wenigstens zwei Gruppen pro Molekül enthält, die aus wenigstens einer der Gruppen —NCO und Epoxy ausgewählt sind, oder

(B) das Linsen-Polymer functionelle Gruppen besitzt, die aus wenigstens einer der Gruppen —COOH, —OH und —NH—R ausgewählt sind, und das bindende Polymer functionelle Gruppen besitzt, die aus wenigstens einer der Gruppen —NCO und Epoxy ausgewählt sind oder

(C) das Linsen-Polymer functionelle Gruppen besitzt, die aus wenigstens einer der Gruppen —NCO und Epoxy ausgewählt sind, und das bindende Polymer funktionelle Gruppen besitzt, die aus wenigstens einer der Gruppen —COOH, —OH und —NH—R ausgewählt sind, oder

(D) das Linsen-Polymer und das bindende Polymer funktionelle Gruppen besitzt, die aus wenigstens einer der Gruppen —NCO und Epoxy ausgewählt sind, und der Farbüberzug auch eine zusätzliche Verbindung enthält, die wenigstens zwei Gruppen pro Molekül enthält, die aus wenigstens einer der Gruppen —COOH, —OH und —NH—R ausgewählt sind.

2. Verfahren nach Anspruch 1(A), worin die zusätzliche Verbindung zwei Isocyanat-Gruppen enthalt.

3. Verfahren nach Anspruch 2, worin die zusätzliche Verbindung aus Hexamethylendiisocyanat, 2,4-Toluoldiisocyanat und Bis(isocyanatophenyl)methan ausgewählt ist.

4. Verfahren nach irgendeinem der Ansprüche 1(A), 2 oder 3, worin das Linsen-Polymer und das bindende Polymer aus Monomeren gebildet werden, die wenigstens ein Monomer umfassen, das aus Acrylsäure, Methacrylsäure, Hydroxy-$C_1$- bis $C_6$-alkylestern von Acryl- und Methacrylsäure, Amino-$C_1$- bis $C_6$-alkylestern von Acryl- und Methacrylsäure, Glycerylestern von Acryl- und Methacrylsäure und deren Mischungen ausgewählt ist.

5. Verfahren nach irgendeinem der Ansprüche 1(A), 2, 3 oder 4, worin das Linsen-Polymer und das bindende Polymer weiterherin wenigstens ein Monomer umfassen, das aus N-Vinyl-heterocyclischen Monomeren, $C_1$- bis $C_6$-Alkylvinylethern, $C_1$- bis $C_6$-Alkylestern von Acryl- oder Methacrylsäure, $C_1$- bis $C_6$-Alkylstyrol, Vinyl-Monomeren, Dien-Monomeren und $C_1$- bis $C_6$-Alkoxy-$C_1$- bis $C_6$-alkylestern von Acryl- oder Methacrylsäure ausgewählt ist.

6. Verfahren nach irgendeinem der Ansprüche 1(A), 2, 3 oder 5, worin das Linsen-Polymer und das bindende Polymer aus einer Mischung von Monomeren, die Hydroxyethylmethacrylat, Ethoxyethylmethacrylat und Methacrylsäure umfaßt, gebildet werden und die zusätliche Verbindung Hexamethylendiisocyanat ist.

7. Verfahren nach irgendeinem der Ansprüche 1(A), 2, 3, 4, 5 oder 6, weiterhin umfassend den Schritt des Aufbringens eines transparenten, im wesentlichen pigmentfreien Überzugs aus dem bindenden Polymer über dem Farbüberzug.

8. Linse, hergestellt mittels eines Verfahrens nach irgendeinem der Ansprüche 1 bis 7.

9. Gefärbte Kontakt-Linse, umfassend

(a) einen aus einem Polymer aufgebauten Linsenkörper,

(b) eine färbende Substanz vermischt mit einem bindenden Polymer auf wenigstens einem Teil einer Oberfläche der Linse,

wobei das bindende Polymer und das Linsen-Polymer durch die Reaktion funktioneller Gruppen aneinander gebunden sind, die aus wenigstens eine der Gruppen —COOH, —OH und —NH—R ausgewählt

sind, worin R Wasserstoff oder $C_1$- bis $C_8$-Alkyl mit funktionellen Gruppen ist, die aus wenigstens einer der Gruppen —NCO und Epoxy ausgewählt sind.

10. Linse nach Anspruch 9, worin das Linsen-Polymer und das bindende Polymer aus wenigstens einem Monomer gebildet werden, das aus Acrylsäure, Methacrylsäure, Hydroxy-$C_1$- bis $C_6$-alkylestern von Acryl- oder Methacrylsäure, Amino-alkylestern von Acryl- oder Methacrylsäure, Glycerinestern von Acryl- und Methacrylsäure und deren Mischungen ausgewählt ist.

**Revendications**

1. Méthode de production d'une lentille colorée de contact comprenant les étapes de:

a) prévoir une lentille de contact construite en un polymère,

b) enduire au moins une portion d'une surface de la lentille d'une couche de couleur comprenant une surface colorante et un polymère de liaison,

c) lier le polymère de la lentille au polymère de liaison par réaction de groupes fonctionnels choisis parmi au moins l'un de —COOH, —OH et —NH—R, où R est hydrogène ou alkyle $C_1$ à $C_8$ avec des groupes fonctionnels choisis parmi au moins l'un de —NCO et époxy, où soit

(A) le polymère de la lentille et le polymère de liaison ont des groupes fonctionnels choisis parmi au moins un de —COOH, —OH et —NH—R et la couche de couleur comprend également un composé additionnel ayant au moins deux groupes par molécule choisis parmi au moins l'un de —NCO et époxy; ou

(B) le polymère de la lentille a des groupes fonctionnels choisis parmi au moins un de —COOH, —OH et —NH—R et polymère de liaison a des groupes fonctionnels choisis parmi au moins l'un de —NCO et époxy;

(C) le polymère de la lentille a des groupes fonctionnels choisis parmi au moins l'un de —NCO et époxy et le polymère de liaison a des groupes fonctionnels choisis parmi au moins l'un de —COO, —OH et —NH—R; ou

(D) le polymère de la lentille et le polymère de liaison ont des groupes fonctionnels choisis parmi au moins l'un de —NCO et époxy et la couche de couleur comprend également un composé additionnel ayant au moins deux groupes par molécule choisis parmi au moins l'un de —COOH, —OH et —NH—R.

2. Méthode de la revendication 1(A) où le composé additionnel contient deux groupes isocyanates.

3. Méthode de la revendication 2 où le composé additionnel et choisi parmi l'hexaméthylène diisocyanate, le 2,4-toluène diisocyanate et le bis(isocyanatophényl)méthane.

4. Méthode selon l'une quelconque des revendications 1(A), 2 ou 3 où le polymère de la lentille et le polymère de liaison sont formés de monomères comprenant au moins un monomère choisi parmi l'acide acrylique, l'acide méthacrylique, un hydroxy alkyl ester $C_1$ à $C_6$ d'acide acrylique et méthacrylique, un amino alkyl ester $C_1$ à $C_6$ d'acide acrylique et méthacrylique, des esters glycéryliques d'acide acrylique et méthacrylique et leurs mélanges.

5. Méthode selon l'une quelconque des revendications 1(A), 2, 3 ou 4 où le polymère de la lentille et le polymère de liaison comprennent de plus au moins un monomère choisi parmi des monomères N-vinyliques hétérocycliques, des éthers d'alkyl $C_1$ à $C_6$ vinyle, des alkyl esters $C_1$ à $C_6$ d'acide acrylique ou méthacrylique, de l'alkyl $C_1$ à $C_6$ styrène, des monomères vinyliques, des monomères diènes et des alcoxy($C_1$ à $C_6$)alkyl($C_1$ à $C_6$) esters d'acide acrylique ou méthacrylique.

6. Méthode selon l'une quelconque des revendications 1(A), 2, 3 ou 5 où le polymère de la lentille et le polymère de liaison sont formés d'un mélange de monomères comprenant l'hydroxyéthyl méthacrylate, l'éthoxyéthyl méthacrylate et l'acide méthacrylique et le composé additionnel est l'hexaméthylène diisocyanate.

7. Méthode selon l'une quelconque des revendications 1(A), 2, 3, 4, 5 ou 6 comprenant de plus l'étape d'appliquer une couche transparente, sensiblement sans pigment comprenant le polymère de liaison sur la couche de couleur.

8. Lentille produite par le méthode selon l'une quelconque des revendications 1 à 7.

9. Lentille colorée de contact comprenant:

(a) un corps de lentille construit en polymère

(b) une substance colorante mélangée à un polymère de liaison sur au moins une portion d'une surface de la lentille.

où le polymère de liaison et le polymère de la lentille sont liés l'un à l'autre par la réaction de groupes fonctionnels choisis parmi au moins l'un de —COOH, —OH et —NH—R, où RT est hydrogène ou alkyle $C_1$ à $C_8$ avec des groupes fonctionnels choisis parmi au moins l'un de —NCO et époxy.

10. Lentille de la revendication 9 où le polymère de la lentille et le polymère de liaison sont formés d'au moins un monomère choisi parmi l'acide acrylique l'acide méthacrylique, un hydroxy alkyl ester $C_1$ à $C_6$ de l'acide acrylique ou méthacrylique, un amino alkyl ester d'acide acrylique ou méthacrylique, des glycérol esters d'acide acrylique ou méthacrylique et leurs mélanges.